# FASCICULE DE BREVET EUROPEEN

(11) **EP 2 959 982 B1**
(45) Date de publication et mention de la délivrance du brevet: **25.10.2017**
(21) Numéro de dépôt: 15170018.4
(22) Date de dépôt: 01.06.2015
(51) Int. Cl.: B08B 3/02, B60S 3/04, B05B 13/04

(54) **INSTALLATION DE NETTOYAGE D'OBJET**
OBJEKTREINIGUNGSANLAGE
FACILITY FOR CLEANING AN OBJECT

(30) Priorité: 23.06.2014 FR 1455766
(43) Date de publication de la demande: 30.12.2015
(73) Titulaire: Astheo Cleaning, 49000 Angers (FR); Mutualité Française Anjou - Mayenne, 49480 Saint Sylvain d'Anjou (FR)
(72) Inventeur: Berland, Philippe, 49000 Angers (FR); Bocquet, Philippe, 49100 Angers (FR)
(74) Mandataire: Godineau, Valérie

(56) Documents cités:
- DE-A1- 2 746 030
- US-A- 2 708 446

## Description

La présente invention concerne une installation de nettoyage d'objet, tel que chariot, fauteuil roulant, poubelle ou autre.

Elle concerne plus particulièrement une installation comprenant une zone de réception de l'objet à nettoyer à l'intérieur de laquelle l'objet est apte à reposer sur une surface support, un cadre équipé d'organes de projection de fluide et positionnable autour de ladite zone de réception avec sa face, dite du dessus, tournée vers la surface support et un châssis support du cadre.

De telles installations de nettoyage sont bien connues à ceux versés dans cet art. Toutefois, jusqu'à présent, de telles installations se caractérisent, soit par un encombrement important résultant du mode de déplacement du cadre, soit par une maintenance difficile en raison de la présence de nombreuses coulisses. Le document US2708446 divulgue notamment une installation de nettoyage d'objet selon le préambule de la revendication 1. Un but de la présente invention est donc de proposer une installation de nettoyage du type précité, dont la conception permet un encombrement réduit et une maintenance aisée.

À cet effet, l'invention a pour objet une installation de nettoyage d'objet, tel que chariot, fauteuil roulant, poubelle, ladite installation comprenant une zone de réception de l'objet à nettoyer à l'intérieur de laquelle l'objet est apte à reposer sur une surface support, un cadre équipé d'organes de projection de fluide et positionnable autour de ladite zone de réception avec sa face, dite du dessous, tournée vers la surface support, et un châssis support du cadre, caractérisée en ce que l'installation comprend deux paires de bras pivotants de couplage du cadre au châssis support, en ce que le cadre est, par l'intermédiaire desdites paires de bras pivotants, monté mobile entre une position basse rapprochée de la surface support et une position haute écartée de la surface support, et en ce que, pour chaque paire de bras, les bras de ladite paire de bras sont respectivement articulés au châssis et au cadre selon des axes d'articulation de manière à former un quadrilatère déformable pour permettre un déplacement dudit cadre entre les positions basse et haute avec une assiette proche de l'horizontalité.

Par assiette proche de l'horizontalité, on entend que le cadre est incliné à plus ou moins 20° par rapport à l'horizontale. Autrement dit, le plan moyen du cadre forme, avec le plan moyen de la surface support, un angle au plus égal à 20°.

Grâce à la présence de deux paires de bras pivotants de couplage du cadre au châssis support avec, pour chaque paire de bras, les bras de ladite paire respectivement articulés à pivotement au châssis et au cadre pour former un mécanisme à quadrilatère déformable, il en résulte une maintenance aisée de l'ensemble, sans nuire à l'encombrement de l'ensemble.

Pour chaque paire de bras, les bras de ladite paire de bras sont respectivement articulés au châssis et au cadre selon des axes d'articulation de manière à former un quadrilatère déformable. Ces axes d'articulation sont des axes pivot d'axe sensiblement horizontal en configuration d'utilisation de nettoyage. Généralement, ces axes pivot s'étendent sensiblement parallèlement au plan moyen de la surface support. Ces axes pivot d'articulation forment, en projection sur un plan vertical, un quadrilatère déformable. Ces axes pivot d'articulation sont de préférence disposés, pour chaque bras d'une paire de bras, l'un à ou au voisinage d'une extrémité dudit bras, l'autre à ou au voisinage de l'autre extrémité dudit bras.

De préférence, les paires de bras sont disposées l'une, entre le châssis et un premier côté du cadre, l'autre, entre le châssis et un deuxième côté du cadre parallèle au premier côté du cadre.

De préférence, pour chaque paire de bras, les bras de ladite paire de bras pivotants sont sensiblement parallèles. Par sensiblement parallèle, on entend que les bras d'une paire de bras forment entre eux un angle au plus égal à 3°.

De préférence, pour chaque paire de bras, les bras de ladite paire de bras sont disposés en configuration d'utilisation de l'installation l'un au-dessus de l'autre dans un plan vertical. En d'autres termes, pour chaque paire de bras, les bras de ladite paire de bras sont disposés l'un au-dessus de l'autre, dans un plan orthogonal au plan moyen de la surface support.

De préférence, pour chaque paire de bras, les bras de ladite paire de bras, respectivement articulés à pivotement au châssis et au cadre, présentent une longueur entre axes pivot d'articulation différente d'un bras à un autre.

De préférence, l'installation comprend des moyens d'entraînement en déplacement à pivotement des bras desdites paires de bras.

De préférence, les moyens d'entraînement en déplacement des bras comprennent au moins un actionneur du genre vérin disposé entre le châssis et une traverse de liaison desdites paires de bras entre elles.

De préférence, l'installation comprend une tête de lavage montée mobile à coulissement le long d'un chemin de guidage s'étendant au-dessus de la surface support et la tête de lavage est couplée aux bras pour un montage solidaire en déplacement, des bras et de la tête de lavage. Ce montage solidaire en déplacement, des bras et de la tête de lavage permet, en parallèle du déplacement à pivotement des bras, un déplacement à coulissement de la tête de lavage.

De préférence, la tête de lavage est couplée aux bras au moins par une liaison pivot de type compas.

De préférence, la surface support se présente sous forme d'un plateau muni, côté face du dessus de réservations à l'intérieur desquelles le cadre est apte à s'escamoter.

De préférence, la zone de réception de l'objet à nettoyer est ménagée à l'intérieur d'une enceinte, de préférence de forme générale parallélépipédique, au moins une partie de la face du dessous, formant plancher de ladite enceinte, formant la surface support.

De préférence, l'enceinte est une enceinte roulante équipée de roues d'appui au sol et de moyens de réglage de sa garde au sol.

L'invention sera bien comprise à la lecture de la description suivante d'exemples de réalisation, en référence aux dessins annexés dans lesquels :

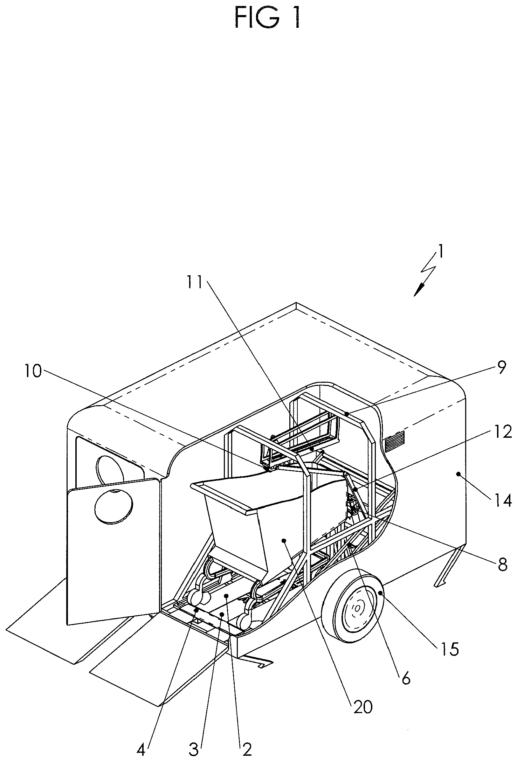

- la figure 1 représente une vue en perspective d'une installation de nettoyage conforme à l'invention, avec un arraché d'une partie de l'enceinte pour mieux visualiser l'intérieur de l'enceinte ;

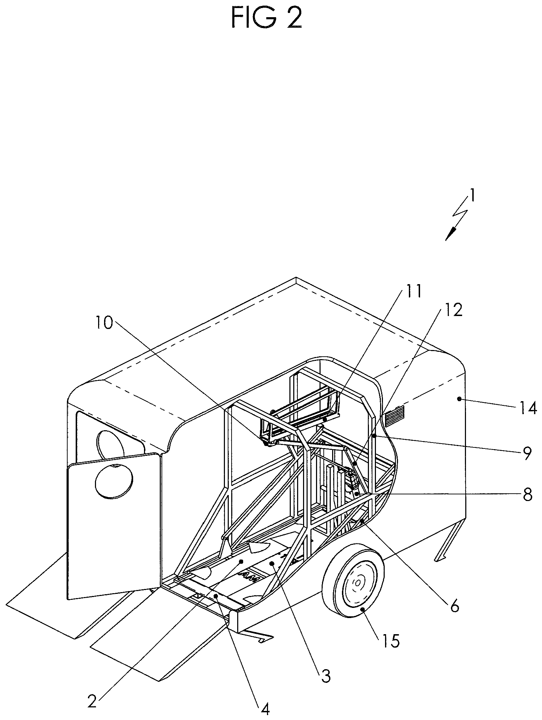

- la figure 2 représente une vue similaire à la figure 1 sans l'objet à nettoyer ;
- la figure 3 représente une vue schématique des déplacements des bras et de la tête de lavage au cours du passage du cadre d'une position basse rapprochée de la surface support à une position haute écartée de la surface support ;

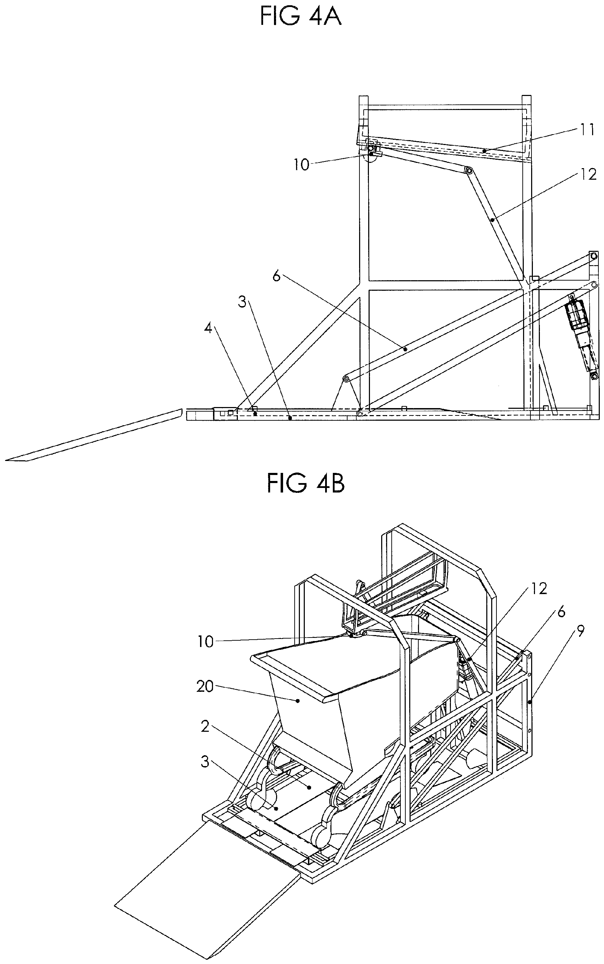

- la figure 4A représente une vue schématique partielle de côté de l'installation en position basse du cadre ;
- la figure 4B représente une vue schématique partielle en perspective de l'installation en position basse du cadre au cours du nettoyage d'un chariot ;

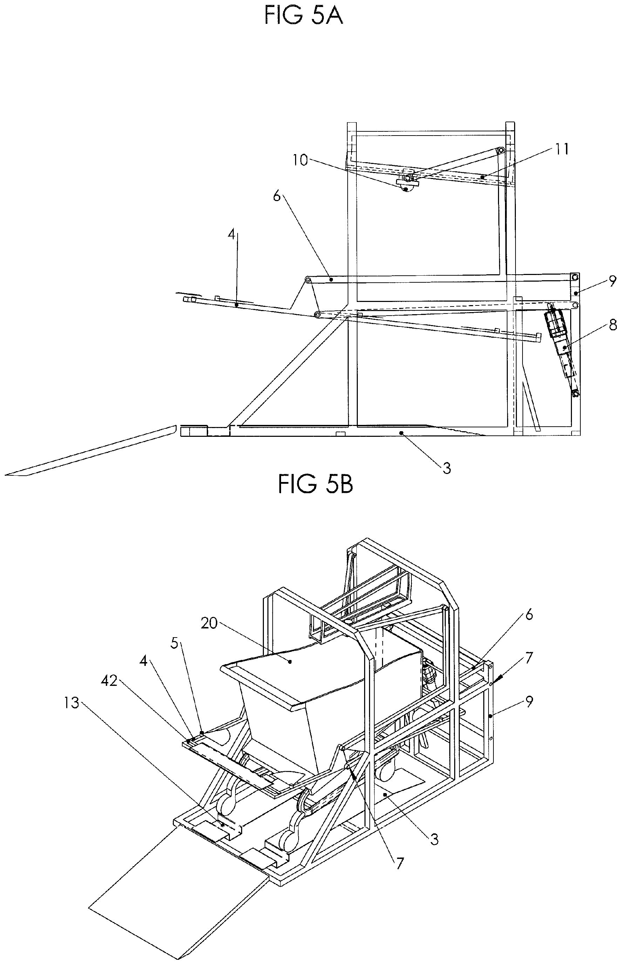

- la figure 5A représente une vue schématique partielle de côté de l'installation en position intermédiaire du cadre ;
- la figure 5B représente une vue partielle en perspective de l'installation en position intermédiaire du cadre au cours du nettoyage d'un chariot ;

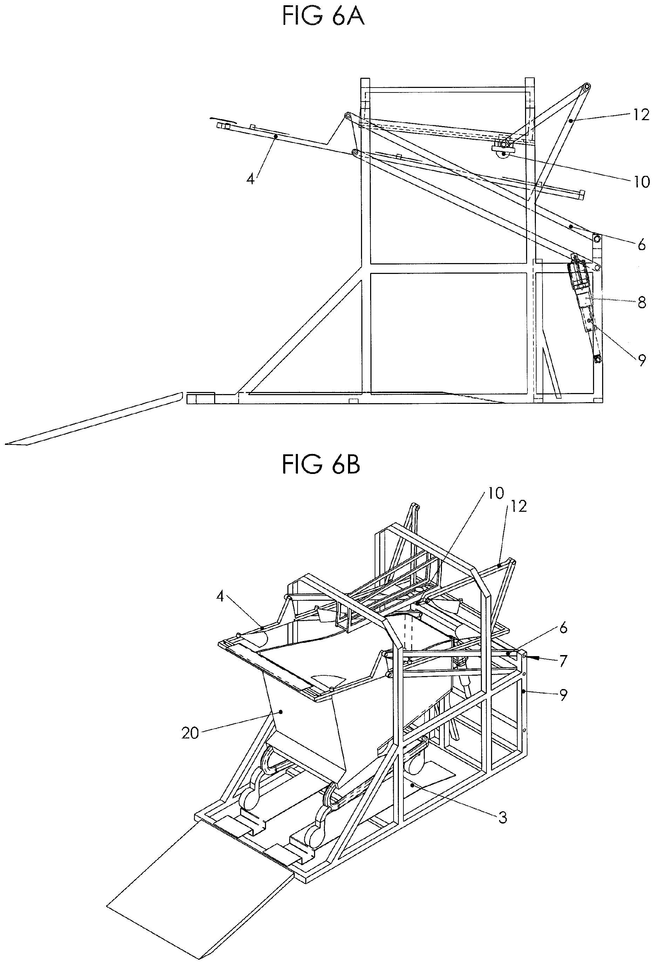

- la figure 6A représente une vue schématique partielle de côté de l'installation en position haute du cadre ;
- la figure 6B représente une vue partielle en perspective de l'installation en position haute du cadre au cours du nettoyage d'un chariot ;

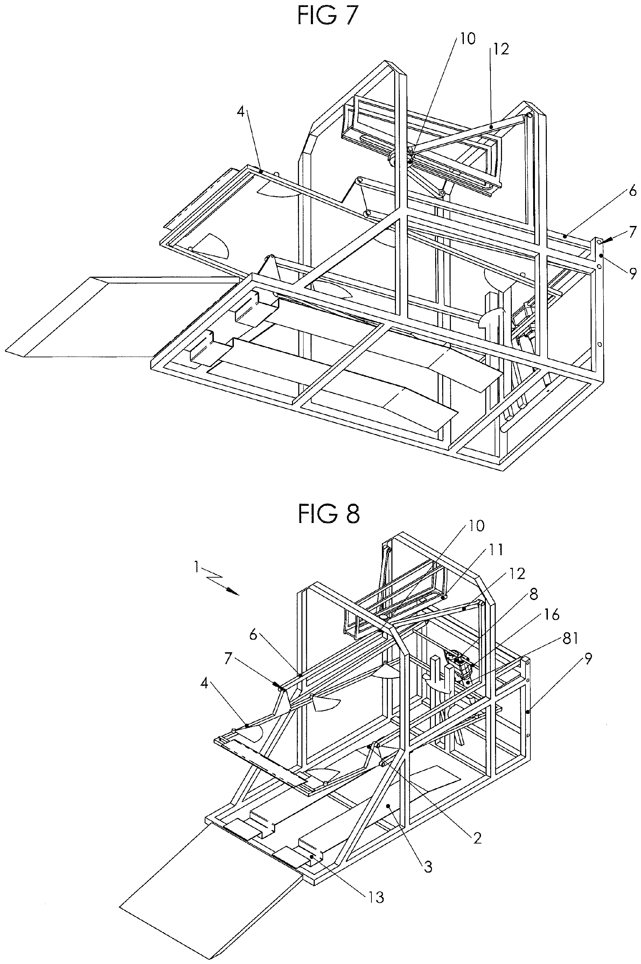

- la figure 7 représente une vue schématique partielle prise par le dessous d'une installation en position intermédiaire du cadre ;
- la figure 8 représente une vue schématique partielle prise par le dessus d'une installation de nettoyage conforme à l'invention en position intermédiaire du cadre.

Comme mentionné ci-dessus, l'invention a pour objet une installation 1 de nettoyage apte à permettre notamment le nettoyage d'objet 20 tel que chariot, fauteuil roulant, poubelle ou autres. Dans les exemples représentés, l'objet 20 à nettoyer est un chariot de supermarché. L'objet à nettoyer aurait pu également être formé d'un panier monté sur un chariot support faisant office de chargeur du ou des objets à nettoyer dans l'installation, l'ensemble chargeur et objet étant dans ce cas considéré au sens de la présente invention comme l'objet 20 à nettoyer.

Cette installation 1 de nettoyage comprend au moins une zone 2 de réception de l'objet 20 à nettoyer à l'intérieur de laquelle l'objet 20 est apte à reposer sur une surface 3 support, un cadre 4 équipé d'organes 5 de projection de fluide et positionnable autour de ladite zone 2 de réception avec sa face 41 dite du dessous, opposée à sa face 42 du dessus, tournée vers la surface 3 support et un châssis 9 support du cadre.

La surface 3 support se présente sous forme d'une surface sensiblement plane équipée, dans son prolongement, de rampes d'accès pour faciliter l'accès à ladite surface par roulement de l'objet. Cette surface 3 support peut être équipée d'au moins une butée de fin de course de l'objet 20 à nettoyer pour permettre un positionnement précis de l'objet sur ladite surface support. Cette butée peut être réglable en position.

Dans l'exemple représenté, la zone 2 de réception de l'objet 20 à nettoyer est ménagée à l'intérieur d'une enceinte 14 de forme générale parallélipédique, avec une partie de la face du dessous, formant plancher de ladite enceinte, qui forme la surface 3 support. Cette enceinte 14 est ici représentée sous forme d'une enceinte roulante équipée de roues 15 d'appui au sol et de moyens non représentés de réglage de sa garde au sol. Ces moyens de réglage sont en soi connus et peuvent être par exemple constitués par des vérins. L'installation peut ainsi former une remorque attelable à un véhicule tracteur.

Dans l'exemple représenté, l'enceinte, qui comprend outre sa face du dessous formant plancher, une face du dessus et des faces latérales reliant entre elles les faces du dessus et du dessous, est compartimentée par une cloison en deux chambres de lavage disposées côte à côte. Ces chambres sont munies chacune d'une ouverture obturable d'entrée/sortie d'introduction d'objet à nettoyer dans l'enceinte. Lesdites ouvertures d'entrée et sortie des chambres sont ménagées sur une même face latérale de l'enceinte. L'enceinte jouxte, côté face latérale de l'enceinte opposée à celle munie des ouvertures d'entrée et sortie, un local technique à l'intérieur duquel sont logés au moins un réservoir de stockage de liquide de nettoyage et des moyens de pompage aptes à alimenter les organes de projection décrits ci-après en fluide de nettoyage contenu dans ledit réservoir.

Chaque chambre de lavage comprend donc une zone 2 de réception de l'objet 20 à nettoyer, un cadre 4 équipé d'organes 5 de projection de fluide et un châssis 9 support du cadre, de sorte que l'installation comprend deux zones 2 de réception d'objet 20 à nettoyer, deux cadres et deux châssis support, de manière à permettre le nettoyage en temps masqué d'un objet.

Pour chaque chambre de lavage, le cadre 4, formé ici par assemblage de quatre profils métalliques, est quant à lui équipé d'organes 5, tels que des buses, de projection de fluide orientées en direction de l'intérieur du cadre, pour permettre, à l'état positionné autour de l'objet 20 à nettoyer, le nettoyage de l'extérieur dudit objet.

Le châssis 9 support est quant à lui formé ici par une structure métallique constituée par un assemblage de montants et de traverses. Ce châssis 9 support peut affecter un grand nombre de formes.

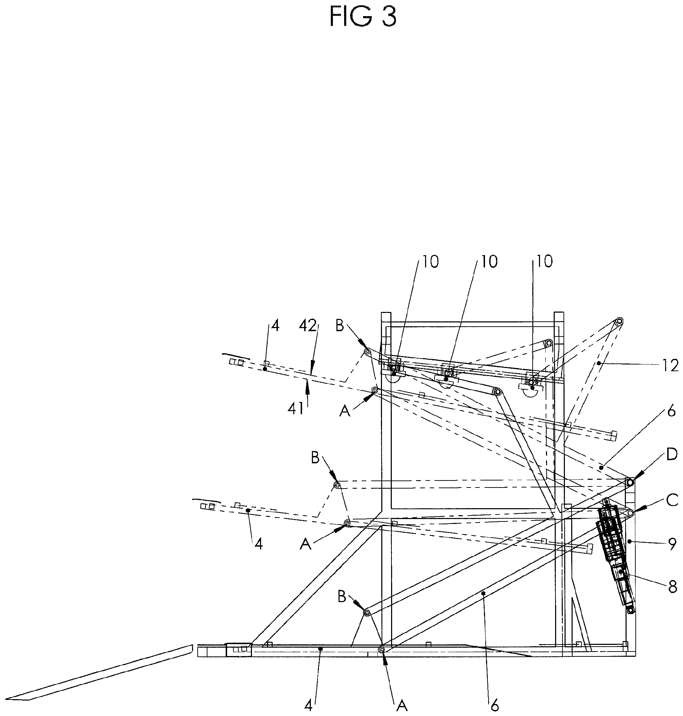

De manière caractéristique à l'invention, l'installation comprend encore deux paires de bras 6 pivotant de couplage du cadre 4 au châssis 9 support, avec pour chaque paire de bras, les bras de ladite paire de bras, respectivement articulés à pivotement au châssis 9 et au cadre 4 selon des axes 7 pivot d'articulation formant en projection sur un plan vertical un quadrilatère ABDC déformable comme l'illustre la figure 3, de sorte que le cadre 4 est, par l'intermédiaire desdites paires de bras pivotants, monté avec une assiette proche de l'horizontalité, mobile entre une position basse rapprochée de la surface 3 support et une position haute écartée de la surface 3 support.

Comme l'illustrent les figures, les paires de bras 6 sont disposées l'une entre le châssis 9 et un premier côté du cadre 4, l'autre entre le châssis 9 et un deuxième côté du cadre 4 parallèle au premier côté du cadre 4, avec chaque bras d'une paire de bras articulé à pivotement à ou au voisinage de l'une de ses extrémités au cadre et à ou au voisinage de l'autre de ses extrémités au châssis. L'articulation à pivotement entre bras et cadre s'opère ici au niveau d'une pièce d'accrochage en saillie de la face 42 de dessus du cadre tandis que l'articulation à pivotement entre bras et châssis 9 s'opère au niveau de montants dudit châssis 9.

Pour chaque paire de bras, les bras de ladite paire sont sensiblement parallèles et sont, en configuration d'utilisation de l'installation, c'est-à-dire en configuration de nettoyage, disposés l'un au-dessus de l'autre dans un plan vertical orthogonal au plan moyen de la surface support.

Ces bras 6 présentent, pour chaque paire de bras, une longueur entre axes pivot d'articulation différente d'un bras à un autre. Dans l'exemple représenté, la distance entre les axes pivot du bras inférieur de chaque paire de bras est inférieure à la distance entre axes pivot du bras supérieur de ladite paire de bras. Cette différence de distance est de l'ordre de 30 mm.

L'installation comprend encore des moyens 8 d'entraînement en déplacement à pivotement des bras 6 desdites paires de bras. Ces moyens 8 d'entraînement en déplacement sont ici formés par un actionneur 81, en l'occurrence un vérin, disposé entre le châssis et une traverse 16 de liaison desdites paires de bras 6 entre elles.

Le corps du vérin est couplé à pivotement à la traverse 16 de liaison entre paires de bras, tandis que la tige est couplée à pivotement, au châssis 9. Les axes pivot sont parallèles aux axes pivot des bras. L'entrée et la sortie de la tige du vérin provoquent un déplacement à pivotement des bras de chaque paire de bras autour de leurs axes pivot de liaison au châssis dans le sens d'un abaissement ou d'une montée desdits bras.

L'installation comprend encore une tête 10 de lavage montée mobile à coulissement le long d'un chemin 11 de guidage s'étendant au-dessus de la surface 3 support. Cette tête 10 de lavage comprend une buse rotative apte à permettre le nettoyage de l'intérieur de l'objet 20 à nettoyer dans le cas d'un chariot.

Le chemin 11 de guidage est formé par au moins un simple rail porté par le châssis 9 support, en partie supérieure de ce dernier. Cette tête 10 de lavage comprenant au moins une buse rotative est couplée à chaque paire de bras 6 par une liaison pivot de type compas 12 pour un montage solidaire en déplacement des bras 6 et de la tête 10 de lavage, de manière à permettre, parallèlement à un déplacement à pivotement des bras, un déplacement à coulissement de la tête de lavage.

Chaque liaison pivot de type compas 12 comprend donc une première branche et une deuxième branche, la première branche du compas étant disposée entre les bras et la liaison pivot desdites première et deuxième branches du compas entre elles et la deuxième branche entre la liaison pivot desdites première et deuxième branches du compas entre elles et la tête 10 de lavage.

La liaison de la première branche du compas aux bras est une liaison rigide, tandis que la liaison de la deuxième branche à la tête de lavage est une liaison pivot d'axe pivot parallèle à l'axe pivot de liaison desdites première et deuxième branches entre elles et à l'axe pivot des bras.

Le fonctionnement de l'installation est tel que suit : en position basse du cadre, la tête 10 de lavage est disposée à une extrémité du chemin de guidage et le compas est ouvert. Lorsque le cadre 4 est entraîné en déplacement depuis sa position basse vers la position haute, la première branche du compas tire sur la deuxième branche du compas dans le sens d'un déplacement à coulissement de la tête 10 de lavage vers l'extrémité opposée du chemin de guidage. Au cours de ce déplacement, les branches du compas se rapprochent l'une de l'autre dans le sens d'une fermeture du compas. Lors du déplacement du cadre 4 de la position haute à la position basse, un déplacement inverse de la tête 18 de lavage est observé. Généralement, au cours d'un cycle de lavage, le cadre effectue deux allers et retours, c'est-à-dire deux déplacements en monte et baisse. À chaque trajet aller ou retour, certaines buses du cadre sont alimentées. Chaque trajet dure environ quinze secondes. Au cours de ces déplacements du cadre, la tête de lavage effectuera également deux allers et retours permettant de nettoyer l'intérieur avant et l'intérieur arrière du chariot.

La pression de lavage est généralement de l'ordre de 60 à 70 bars.

Pour parfaire l'ensemble, la surface 3 support se présente sous forme d'un plateau muni, côté face du dessus, de réservations 13 à l'intérieur desquelles le cadre 4 est apte à s'escamoter. Ces réservations 13 sont formées par de simples logements à l'intérieur du plateau constitutif de la surface 3 support.

Ces réservations permettent au cadre de ne pas gêner, en position basse, l'entrée ou la sortie de l'objet de sa zone 2 de réception.

## Revendications

1. Installation (1) de nettoyage d'objet (20), tel que chariot, fauteuil roulant, poubelle, ladite installation (1) comprenant une zone (2) de réception de l'objet (20) à nettoyer à l'intérieur de laquelle l'objet (20) est apte à reposer sur une surface (3) support, un cadre (4) équipé d'organes (5) de projection de fluide et positionnable autour de ladite zone (2) de réception avec sa face (41), dite du dessous, tournée vers la surface (3) support, et un châssis (9) support du cadre (4), l'installation comprend deux paires de bras (6) pivotants de couplage du cadre (4) au châssis (9) support, en ce que le cadre (4) est, par l'intermédiaire desdites paires de bras (6) pivotants, monté mobile entre une position basse rapprochée de la surface (3) support et une position haute écartée de la surface (3) support **caractérisée en ce que**, pour chaque paire de bras (6), les bras (6) de ladite paire de bras sont respectivement articulés au châssis (9) et au cadre (4) selon des axes (7) d'articulation de manière à former un quadrilatère (ABDC) déformable pour permettre un déplacement dudit cadre (4) entre les positions basse et haute avec une assiette proche de l'horizontalité.

2. Installation (1) de nettoyage selon la revendication 1,
**caractérisée en ce que** les paires de bras (6) sont disposées l'une, entre le châssis (9) et un premier côté du cadre (4), l'autre, entre le châssis (9) et un deuxième côté du cadre (4) parallèle au premier côté du cadre (4).

3. Installation (1) de nettoyage selon l'une des revendications précédentes,
**caractérisée en ce que**, pour chaque paire de bras (6), les bras (6) de ladite paire de bras pivotants sont sensiblement parallèles.

4. Installation (1) de nettoyage selon l'une des revendications précédentes,
**caractérisée en ce que**, pour chaque paire de bras (6), les bras (6) de ladite paire de bras sont disposés en configuration d'utilisation de l'installation l'un au-dessus de l'autre dans un plan vertical.

5. Installation (1) de nettoyage selon l'une des revendications précédentes,
**caractérisée en ce que**, pour chaque paire de bras (6), les bras (6) de ladite paire de bras, respectivement articulés à pivotement au châssis (9) et au cadre (4), présentent une longueur entre axes (7) pivot d'articulation différente d'un bras (6) à un autre.

6. Installation (1) de nettoyage selon l'une des revendications précédentes,
**caractérisée en ce que** l'installation comprend des moyens (8) d'entraînement en déplacement à pivotement des bras (6) desdites paires de bras.

7. Installation (1) de nettoyage selon la revendication 6,
**caractérisée en ce que** les moyens (8) d'entraînement en déplacement des bras comprennent au moins un actionneur (81) du genre vérin disposé entre le châssis (9) et une traverse (16) de liaison desdites paires de bras (6) entre elles.

8. Installation (1) de nettoyage selon l'une des revendications précédentes,
**caractérisée en ce que** l'installation comprend au moins une tête (10) de lavage montée mobile à coulissement le long d'un chemin (11) de guidage s'étendant au-dessus de la surface (3) support et **en ce que** la tête (10) de lavage est couplée aux bras (6) pour un montage solidaire en déplacement, des bras (6) et de la tête (10) de lavage.

9. Installation (1) de nettoyage selon la revendication 8,
**caractérisée en ce que** la tête (10) de lavage est couplée aux bras (6) au moins par une liaison pivot de type compas (12).

10. Installation (1) de nettoyage selon l'une des revendications précédentes,
**caractérisée en ce que** la surface (3) support se présente sous forme d'un plateau muni, côté face du dessus de réservations (13) à l'intérieur desquelles le cadre (4) est apte à s'escamoter.

11. Installation (1) de nettoyage selon l'une des revendications précédentes,
**caractérisée en ce que** la zone de réception de l'objet (20) à nettoyer est ménagée à l'intérieur d'une enceinte (14), de préférence de forme générale parallélépipédique, au moins une partie de la face du dessous, formant plancher de ladite enceinte, formant la surface (3) support.

12. Installation (1) de nettoyage selon la revendication 11,
**caractérisée en ce que** l'enceinte (14) est une enceinte roulante équipée de roues (15) d'appui au sol et de moyens de réglage de sa garde au sol.

## Patentansprüche

1. Reinigungsanlage eines Objekts (20) wie Wagen, Rollstuhl, Mülleimer, wobei die Anlage (1) eine Empfangszone (2) des zu reinigenden Objekts (20), in deren Innern das Objekt (20) imstande ist, auf einer Trägerfläche (3) zu ruhen, einen Rahmen (4), ausgestattet mit Fluidprojektionsorganen (5), positionierbar um die Empfangszone (2) und mit seiner Unterseite (41) in Richtung der Trägerfläche (3) zeigend, und ein Stützgestell (9) des Rahmens (4) umfasst,
wobei die Anlage zwei Paare von schwenkbaren Armen (6) der Kopplung des Rahmens (4) an das Stützgestell (9) umfasst und der Rahmen (4) mit Hilfe der Paare von schwenkbaren Armen (6) zwischen einer niedrigen Position, angenähert an die Trägerfläche (3), und einer hohen Position, beabstandet von der Trägerfläche (3,) bewegbar montiert ist,
**dadurch gekennzeichnet, dass** für jedes Paar von Armen (6) die Arme (6) des Paares von Armen jeweils am Gestell (9) und am Rahmen (4) gemäß Gelenkachsen (7) derart angelenkt sind, dass ein verformbares Viereck (ABDC) gebildet wird, um eine Verlagerung des Rahmens (4) zwischen der niedrigen und hohen Position mit einer Grundlage nahe der Horizontalität zu erlauben.

2. Reinigungsanlage nach Anspruch 1,
**dadurch gekennzeichnet, dass** die Paare von Armen (6), einer, zwischen dem Gestell (9) und einer ersten Seite des Rahmens (4), der andere, zwischen dem Gestell (9) und einer zweiten Seite des Rahmens (4), die parallel zur ersten Seite des Rahmens (4) ist, angeordnet sind.

3. Reinigungsanlage nach einem der vorangehenden Ansprüche,
**dadurch gekennzeichnet, dass** für jedes Paar von Armen (6) die Arme (6) des Paares von schwenkenden Armen etwa parallel sind.

4. Reinigungsanlage nach einem der vorangehenden Ansprüche,
**dadurch gekennzeichnet, dass** für jedes Paar von Armen (6) die Arme (6) des Paares von Armen in Benutzungskonfiguration der Anlage einer über dem anderen in einer vertikalen Ebene angeordnet sind.

5. Reinigungsanlage nach einem der vorangehenden Ansprüche,
**dadurch gekennzeichnet, dass** für jedes Paar von Armen (6) die Arme (6) des Paares von Armen, jeweils schwenkend am Gestell (9) und am Rahmen (4) angelenkt, eine Länge zwischen Gelenkdrehzapfenachsen (7) aufweisen, die sich von einem Arm (6) zum anderen unterscheidet.

6. Reinigungsanlage nach einem der vorangehenden Ansprüche,
**dadurch gekennzeichnet, dass** die Anlage Antriebsmittel (8) der schwenkenden Verlagerung der Arme (6) der Paare von Armen umfasst.

7. Reinigungsanlage nach Anspruch 6,
**dadurch gekennzeichnet, dass** die Antriebsmittel (8) der Verlagerung der Arme mindestens einen Aktuator (81) des Typs Zylinder umfassen, der zwischen dem Gestell (9) und einem Verbindungsquerträger (16) der Paare von Armen (6) untereinander angeordnet ist.

8. Reinigungsanlage nach einem der vorangehenden Ansprüche,
**dadurch gekennzeichnet, dass** die Anlage mindestens einen Reinigungskopf (10) umfasst, der entlang eines Führungswegs (11), der sich über der Trägerfläche (3) erstreckt, gleitend bewegbar montiert ist, und dass der Reinigungskopf (10) für eine fest verbundene Verlagerungsmontage der Arme (6) und des Reinigungskopfs (10) an die Arme (6) gekoppelt ist.

9. Reinigungsanlage nach Anspruch 8,
**dadurch gekennzeichnet, dass** der Reinigungskopf (10) an die Arme (6) mindestens mittels einer Drehzapfenverbindung vom Typ Zirkel (12) gekoppelt ist.

10. Reinigungsanlage nach einem der vorangehenden Ansprüche,
**dadurch gekennzeichnet, dass** die Trägerfläche (3) die Form einer Platte hat, die auf der Oberseite mit Aussparungen (13) ausgestattet ist, in welche der Rahmen (4) einsetzbar ist.

11. Reinigungsanlage nach einem der vorangehenden Ansprüche,
**dadurch gekennzeichnet, dass** die Empfangszone des zu reinigenden Objekts (20) im Innern eines Behälters (14), vorzugsweise allgemein parallelepipedischer Form, ausgebildet ist, wobei mindestens ein Teil der Unterseite, die den Boden des Behälters bildet, die Trägerfläche (3) bildet.

12. Reinigungsanlage nach Anspruch 11,
**dadurch gekennzeichnet, dass** der Behälter (14) ein rollender Behälter ist, ausgestattet mit Stützrädern (15) auf dem Boden und Einstellmitteln seiner Bodenfreiheit.

## Claims

1. A facility (1) for cleaning an object (20), such as a cart, wheelchair, waste bin, said facility (1) comprising a zone (2) for receiving the object (20) to be cleaned inside which the object (20) is able to rest on a support surface (3), a frame (4) equipped with fluid spray members (5) and able to be positioned around said receiving zone (2) with its socalled bottom face (41) turned toward the support surface (3), and a support chassis (9) of the frame (4),
the facility comprises two pairs of pivoting arms (6) coupling the frame (4) support chassis (9), in that the frame (4) is, via said pairs of pivoting arms (6), mounted movable between a low position close to the support surface (3) and a high position separated from the support surface (3),
**characterized in that**, for each pair of arms (6), the arms (6) of said pair of arms are respectively articulated to the chassis (9) and the frame (4) along articulation axes (7) so as to form a deformable quadrilateral (ABCD) to allow a movement of said frame (4) between the low and high positions with a nearly horizontal pitch.

2. The cleaning facility (1) according to claim 1,
**characterized in that** the pairs of arms (6) are positioned such that one is between the chassis (9) and the first side of the frame (4), and the other is between the chassis (9) and a second side of the frame (4) parallel to the first side of the frame (4).

3. The cleaning facility (1) according to one of the preceding claims,
**characterized in that**, for each pair of arms (6), the arms (6) of said pair of pivoting arms are substantially parallel.

4. The cleaning facility (1) according to one of the preceding claims,
**characterized in that**, for each pair of arms (6), the arms (6) of said pair of arms are arranged in the usage configuration of the facility such that one is above the other in a vertical plane.

5. The cleaning facility (1) according to one of the preceding claims,
**characterized in that**, for each pair of arms (6), the arms (6) of said pair of arms, respectively pivotably articulated to the chassis (9) and the frame (4), have a different length between articulation pivot axes (7) from one arm (6) to another.

6. The cleaning facility (1) according to one of the preceding claims,
**characterized in that** the facility comprises means (8) driving the pivoting movement of the arms (6) of said pairs of arms.

7. The cleaning facility (1) according to claim 6,
**characterized in that** the means (8) for driving the movement of the arms comprise at least one actuator (81) of the jack type arranged between the chassis (9) and a crosspiece (16) connecting said pairs of arms (6) to one another.

8. The cleaning facility (1) according to one of the preceding claims,
**characterized in that** the facility comprises at least one washing head (10) mounted sliding along a guide path (11) extending above the support surface (3) and **in that** the washing head (10) is coupled to the arms (6) for a movably secured assembly of the arms (6) and the washing head (10).

9. The cleaning facility (1) according to claim 8,
**characterized in that** the washing head (10) is coupled to the arms (6) at least by a pivot link of the compass type (12).

10. The cleaning facility (1) according to one of the preceding claims,
**characterized in that** the support surface (3) assumes the form of a plate provided, on the top face side, with recesses (13) inside which the frame (4) can retract.

11. The cleaning facility (1) according to one of the preceding claims,
**characterized in that** the zone for receiving the object (20) to be cleaned is arranged inside an enclosure (14), preferably generally parallelepiped, at least part of the bottom face, forming the floor of said enclosure, forming the support surface (3).

12. The cleaning facility (1) according to claim 11,
**characterized in that** the enclosure (14) is a rolling enclosure equipped with wheels (15) bearing on the ground and means for adjusting its ground clearance.
